(19) Europäisches Patentamt
European Patent Office
Office européen des brevets

(11) Veröffentlichungsnummer: **0 414 071 A2**

(12) **EUROPÄISCHE PATENTANMELDUNG**

(21) Anmeldenummer: **90115432.8**

(22) Anmeldetag: **11.08.90**

(51) Int. Cl.5: **C08G 77/448**, C08G 64/18, G11B 7/24

(30) Priorität: **25.08.89 DE 3928097**

(43) Veröffentlichungstag der Anmeldung: **27.02.91 Patentblatt 91/09**

(84) Benannte Vertragsstaaten: **DE FR GB IT**

(71) Anmelder: **BAYER AG**
**D-5090 Leverkusen 1 Bayerwerk(DE)**

(72) Erfinder: **Hähnsen, Heinrich, Dr.**
**Homberger Strasse 16**
**D-4100 Duisburg 14(DE)**
Erfinder: **Horlacher, Peter, Dr.**
**Ginsterweg 4**
**D-7913 Senden(DE)**
Erfinder: **Westeppe, Uwe, Dr.**
**Vogelskamp 72**
**D-4020 Mettmann(DE)**
Erfinder: **Berg, Klaus, Dr.**
**Hansastrasse 124**
**D-4150 Krefeld(DE)**
Erfinder: **Grigo, Ulrich, Dr.**
**Michelsheide 9**
**D-4152 Kempen 3(DE)**
Erfinder: **Siebourg, Wolfgang, Dr.**
**Augustastrasse 24**
**D-5300 Bonn 2(DE)**
Erfinder: **Kauth, Hermann, Dr.**
**Kolpingstrasse 34**
**D-4150 Krefeld 11(DE)**

(54) **Polyorganosiloxan-Polycarbonat-Blockcopolymere und ihre Verwendung zur Herstellung optischer Datenspeicher.**

(57) Polydiorganosiloxan-Polycarbonat-Blockcopolymere,die ein mittleres Molekulargewicht $\overline{M}_w$ (Gewichtsmittel) von 8.000 bis 30.000, einen Gehalt an aromatischen Carbonatstruktureinheiten von 90 bis 99,9 Gew.-% und einen Gehalt an Polydiorganosiloxanstruktureinheiten mit einem Polymerisationsgrad von 2 bis 40 von 10 bis 0,1 Gew.-% besitzen und ihre Verwendung als Substrat für optische Datenspeicher.

EP 0 414 071 A2

# POLYORGANOSILOXAN-POLYCARBONAT-BLOCKCOPOLYMERE UND IHRE VERWENDUNG ZUR HERSTELLUNG OPTISCHER DATENSPEICHER

Als Substrate für optische Datenspeicher (compact discs) werden u.a. Polycarbonate verwendet. Die Information wird durch Laserstrahlen gespeichert und ausgelesen. Deshalb werden an die optischen Eigenschaften von Substraten für optische Datenspeicher hohe Anforderungen gestellt (bezüglich Reinheit und Fehlen von Doppelbrechung). Ferner ist sehr gutes Schmelzfließverhalten erforderlich, besonders für Videoplatten.

EP-A 0 274 092 beschreibt Copolycarbonate auf Basis von 1 bis 99 Mol-% 2,2-Bis-(4-hydroxy-3-tert.-butyl-phenyl)propan, Rest andere Bisphenole wie Bisphenol-A, -AP, -Z. Diese Copolycarbonate weisen reduzierte photoelastische Konstanten und damit eine reduzierte Doppelbrechung auf Eine Fülle von weiteren Literaturstellen betrifft Copolycarbonate mit reduzierter Doppelbrechung (z.B. die japanischen Patentanmeldungen 188 422, 63 056 556, 63 077 933, 62 227 927, 62 027 426, 63 095 228, 63 092 644 sowie 63 089 525 bis 63 089 541.

Der Erfindung liegt die Erkenntnis zugrunde, daß sich spezielle Polydiorganosiloxan-Polycarbonat-Blockcopolymere als Substrate für optische Datenspeicher (compact discs) eignen. Aufgrund ihres guten Fließverhaltens und ihrer spannungsoptischen Eigenschaften lassen sich auch großflächige Platten herstellen.

Gegenstand dieser Erfindung sind somit spezielle Polydiorganosiloxan-Polycarbonat-Blockcopolymeren sowie optische Datenspeicher, deren Substrat aus speziellen Polydiorganosiloxan-Polycarbonat-Blockcopolymeren besteht. Ein weiterer Gegenstand der Erfindung ist die Verwendung von speziellen Polydiorganosiloxan-Polycarbonat-Blockcopolymeren zur Herstellung optischer Datenspeicher.

Polydiorganosiloxan-Polycarbonat-Blockcopolymere sind bekannt (vgl. US-PS 3 189 662, 3 419 634, DE-OS 3 334 782, 3 506 472, EP-A 122 535, 135 794).

Die erfindungsgemäß verwendbaren thermoplastischen Polydiorganosiloxan-Polycarbonat-Blockcopolymere besitzen bevorzugt ein mittleres Molekulargewicht $\overline{M}$ w (Gewichtsmittel) von 8.000 bis 30.000, vorzugsweise von etwa 10.000 bis 25.000 (ermittelt in bekannter Weise durch Ultrazentrifugation oder Streulichtmessung), einen Gehalt an aromatischen Carbonatstruktureinheiten von 90 bis 99,9 Gew.-%, vorzugsweise 95 bis 99,9 Gew.-%, insbesondere 97 bis 99,9 Gew.-%, und einen Gehalt an Polydiorganosiloxanstruktureinheiten von 10 bis 0,1 Gew.-%; vorzugsweise 5 bis 0,1, insbesondere 3 bis 50,1 Gew.-%. Diese Blockcopolymere zeichnen sich dadurch aus, daß sie gute Transparenz haben, wie sie für die Verwendung als Substrat für optische Datenspeicher erforderlich sind.

Sie können hergestellt werden aus

a) $\alpha,\omega$-Bishydroxyaryloxy-polydiorganosiloxanen mit einem Polymerisationsgrd Pn von 2 bis 40, vorzugsweise von 3 bis 20, insbesondere 2 bis 15, wobei solche der Formel (II) bevorzugt werden,

b) Diphenolen der Formel (I), gegebenenfalls

c) Kettenabbrechern und gegebenenfalls

d) Verzweigern,

z.B. durch Zweiphasengrenzflächenpolykondensation mit "Carbonatspendern" wie Phosgen.

Geeignete $\alpha,\omega$-Bishydroxyaryloxy-polydiorganosiloxane (a) sind z.B. aus US-PS 3 419 634 bekannt.

Bevorzugte $\alpha,\omega$-Bishydroxyaryloxy-polydiorganosiloxane sind solche der Formel (II),

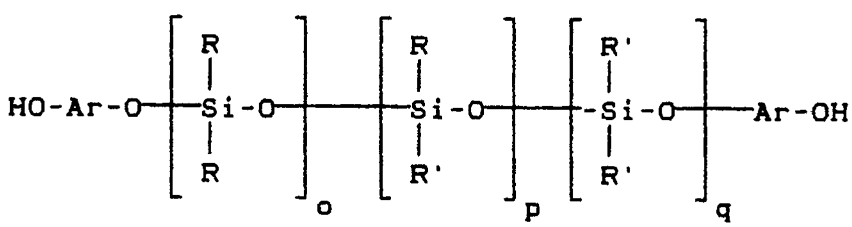

(II)

worin

Ar den Rest eines Diphenols der Formel (I) ohne die beiden Hydroxylgruppen und

R und R′ lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten,

und

die Anzahl der Diorganosiloxy-Einheiten n = o + p + q = 2 bis 40, vorzugsweise 2 bis 20, insbesondere

2 bis 15, ist.

In Formel (II) sind die Reste R und die Reste R′ unabhängig voneinander. Sie sind bevorzugt $C_1$-$C_{20}$-Alkyl, $C_2$-$C_6$-Alkenyl, $C_6$-$C_{14}$-Aryl. Halogeniert bedeutet teilweise oder vollständig chloriert, bromiert oder fluoriert. Besonders bevorzugt ist R und R′ Methyl, Ethyl, Propyl, n-Butyl, tert.-Butyl, Vinyl, Phenyl, Naphthyl, Chlormethyl, Trifluorpropyl, Perfluorbutyl und Perfluorooctyl.

Diphenole b) sind Diphenole der Formel (I),

HO-Ar-OH (I)

worin

Ar gleiche oder verschiedene Arylenreetemit vorzugsweise 6 bis 30 C-Atomen sind.

Bevorzugt sind Diphenole der Formel,

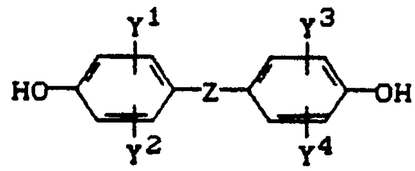

worin

Z eine Einfachbindung, $-CH_2-$,

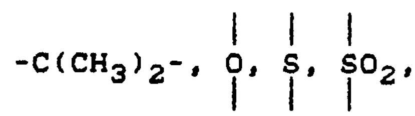

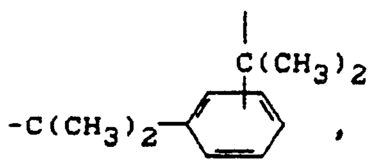 ,

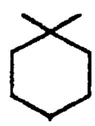 ,

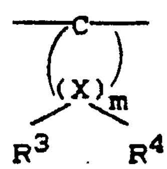

bedeuten und

$Y^1$ hie $Y^4$ gleich oder verechieden sind und Wasserstoff, $C_1$-$C_4$-Alkyl, vorzugsweise Methyl, oder Halogen, vorzugsweise Chlor oder Brom, bedeuten,

m eine ganze Zahl von 4 bis 7, bevorzugt 4 oder 5, sind,

$R^3$ und $R^4$ für jedes X individuell wählbar, unabhängig voneinander Wasserstoff oder $C_1$-$C_{12}$-Alkyl und

X Kohlenstoff bedeuten,

mit der Maßgabe, daß an mindestens einem Atom X $R^3$ und $R^4$ gleichzeitig Alkyl bedeuten.

Bevorzugt sind an ein bis zwei Atomen X, insbesondere nur an einem Atom X, $R^3$ und $R^4$ gleichzeitig Alkyl. Bevorzugter Alkylrest ist Methyl; die X-Atome in α-Stellung zu dem diphenylsubstituierten C-Atom (C1) sind bevorzugt nicht mit Alkyl substituiert, dagegen ist die geminale Disubstitution in β-Stellung zu C1 bevorzugt.

Beispiele für Diphenole der Formel (I) sind:

Hydrochinon

Resorcin

Dihydroxydiphenyle

Bis-(hydroxyphenyl)-alkane

Bis-(hydroxyphenyl)-cycloalkane

Bis-(hydroxyphenyl)-sulfide

Bis- (hydroxyphenyl)-ether

Bis-(hydroxyphenyl)-sulfoxide

Bis-(hydroxyphenyl)-sulfone und

α,ω-Bis-(hydroxyphenyl )-diisopropylbenzole

sowie deren kernalkylierte und kernhalogenierte Derivate Diese und weitere geeignete aromatische Dihydroxyverbindungen sind z.B. in den US-PS 3 028 365 und 2 999 846 und in den DE-OS 1 570 703, 2 036

052, 2 063 050, 2 211 957, der französischen Patentschrift 1 561 518 und in der Monographie "H. Schnell, Chemistry and Physics of Polycarbonates, Interscience Publishers, New York 1964" beschrieben.

Diphenole der Formel (I), in denen

Z = 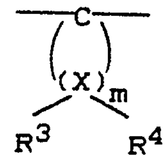

sind in der deutschen Offenlegungsschrift 3 832 396 beschrieben.

Beispiele besonders geeigneter Bisphenole sind:
2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis(3,5-dimethyl-4-hydroxyphenyl)-propan
Bis-(3,5-dimethyl-4-hydroxyphenyl)-methan
Bis-(4-hydroxyphenyl)-sulfid und
1,1-Bis-(4-hydroxyphenyl)-3,3,5-trimethylcyclohexan.

Es können ein oder mehrere Diphenole der Formel (I) eingesetzt werden.

Als Kettenabbrecher (c) sind aromatische Verbindungen mit einer funktionellen Gruppe wie aromatische Säurehalogenide oder Phenole, insbesondere die gebräuchlichen Phenole wie p-tert.-Butylphenol, p-Chlorphenol, 2,4,6-Tribromphenol und Phenol in üblichen Mengen einsetzbar, die sich nach dem gewünschten Molekulargewicht der Blockcopolymeren bestimmen. Besonders bevorzugt sind als Kettenabbrecher Phenole der Formel (III)

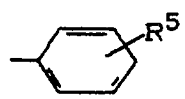 (III)

$R^5$: $C_8$-$C_{15}$-Alkyl, Isoalkyl.

Im allgemeinen werden 0,5 Mol-% bis 10,0 Mol-% an Kettenabbrechern, bezogen auf eingesetzte Diphenole, eingesetzt.

Als Verzweiger d) können, was nicht bevorzugt ist, Verbindungen mit drei oder mehr als drei funktionellen Gruppen, insbesondere solche mit drei oder mehr als drei phenolischen Hydroxylgruppen eingesetzt werden, in den üblichen Mengen von 0,05 bis 2 Mol-%, bezogen auf Diphenole.

Einige der verwendbaren Verbindungen mit drei oder mehr als drei phenolischen Hydroxylgruppen sind beispielsweise 2,4-Bis-(4-hydroxyphenyl-isopropyl)-phenol, 2,6-Bis-(2′-hydroxy-5′-methylbenzyl)-4-methylphenol, 2-(4-Hydroxyphenyl)-2-(2,4-dihydroxyphenyl)-propan und 1,4-Bis-(4,4′-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Geeignete organische Lösungsmittel für die Zweiphasengrenzflächenpolykondensation sind für die Herstellung von aromatischen Polycarbonaten bekannt; Beispiele sind Methylenchlorid und Chlorbenzol.

Die Mengen an organischem Lösungsmittel (= organische Phase) werden vorzugsweise so gewählt, daß die Zweiphasengrenzflächenpolykondensation in 5 bis 20 %iger Lösung im organischen Lösungsmittel, vorzugsweise 10 bis 15 %iger Lösung, abläuft.

Geeignete basische Verbindungen für die Bildung der wäßrigen alkalischen Phase sind z.B. LiOH, NaOH, KOH, Ca(OH)2 und $Ba(OH)_2$.

Bei der Zweiphasengrenzflächenpolykondensation sind die Volumina von wäßrig-alkalischer Phase und gesamter organischer Phase vorzugsweise gleich.

Der pH-Wert der wäßrigen Phase liegt während der Reaktion zwischen 9 und 14, vorzugsweise zwischen 12 und 13.

Geeignete Katalysatoren für die Zweiphasengrenzflächen-Polykondensation sind die für die Polycarbonatherstellung bekannten tertiären aliphatischen Amine wie

Trimethylamin, Triethylamin, n-Tripropylamin, n-Tributylamin oder N-Ethylpiperidin; gegebenenfalls können auch die ebenfalls für die Polycarbonatherstellung bekannten quartären Ammoniumsalze wie Tetrabutylammoniumbromid eingesetzt werden.

Die Katalysatormenge variiert je nach eingesetztem Diphenol von 0,2 bis 5 Mol-%, bei Einsatz von tetramethylsubstituierten Diphenolen von 5 bis 10 Mol-%, bezogen jeweils auf die Gesamtmenge an Diphenolen (b).

Die relativen Mengen von Diphenol (b) und $\alpha,\omega$-Bishydroxyaryloxypolydiorganosiloxan (a) richten sich nach dem gewünschten Gehalt an Poly-(diorganosiloxan)-Einheiten im Blockcopolymeren. Die Umsetzung der Reaktanten ist normalerweise quantitativ.

Die $\alpha,\omega$-Bishydroxyaryloxypolydiorganosiloxane und der Kettenabbrecher können bei der Zweiphasengrenzflächenpolykondensation zusammen mit den Diphenolen (b) vor der Phosgeneinleitung zugegeben werden oder separat während oder nach der Phosgeneinleitung, in jedem Fall aber vor der Zugabe des Polykondensationskatalysators.

Als "Carbonatspender" für die Zweiphasengrenzflächenpolykondensation dienen in bekannter Weise Kohlensäurehalogenide, insbesondere Kohlensäurechloride, wie Phosgen, $COBr_2$, oder die Bischlorkohlensäureester von Diphenolen in entsprechender Menge, wobei jeweils pro Mol Halogen-Kohlensäure-Gruppe weniger als 1/2 Mol Diphenol verwendet wird.

Die Polyorganosiloxan-Polycarbonat-Blockcopolymere können aus den Reaktionsmischungen genau wie aromatische Polycarbonate abgetrennt werden. Hierbei wird zunächst die organische, Polymer gelöst enthaltende Phase abgetrennt, gewaschen und anschließend das Polymere durch Eindampfen der Lösung isoliert, wobei als Endstufe der Aufarbeitung vorzugsweise ein Ausdampfextruder benutzt wird.

Die Polyorganosiloxan-Polycarbonat-Blockcopolymere können Alterungsschutzmittel enthalten, die die Stabilität der Verfahrensprodukte wesentlich erhöhen Zur Modifizierung der erfindungsgemäßen Produkte können z.B. die für Polycarbonat üblichen Entformungsmittel, wie z.B. Pentaerythrittetrastearat, Glycerintristearat enthalten sein.

Erfindungsgemäß geeignete Polyorganosiloxan-Polycarbonat-Blockcopolymere haben gute Transparenz, besonders gutes Fließverhalten und niedrige Doppelbrechung. Als hinreichend transparent gilt ein Polymer, wenn bei einer Probendicke von mindestens 200 µm der Haze-Index (bestimmt nach ASTM D 1003) kleiner als 10 % ist.

Geeignete Formteile als Substrate für optische Datenspeicher sind beispielsweise Scheiben, Platten, Fasern.

Beispiel 1

44,51 g (0,19 mol) Bisphenol A und 13,5 g (0,34 mol) NaOH werden unter Inertgas in 766,5 g Wasser gelöst. Dann fügt man eine Lösung von 1,1 g eines Polydimethylsiloxans ($P_n$ = 5) mit Bisphenol A-Endgruppen (= 1 Gew.-% $SiMe_2O$) und 0,73 g (7,8 mmol) Phenol in 350 ml Methylenchlorid hinzu. In die gut gerührte Lösung werden bei pH 12 bis 13 und 21 bis 25 °C 31,8 g (0,32 mol) Phosgen eingeleitet. Danach werden 0,28 ml Ethylpiperidin zugegeben und noch 45 min. weiter gerührt. Die wäßrige Phase wird abgetrennt und die organische Phase, nach Ansäuern mit Phosphorsäure, mit Wasser neutral gewaschen und vom Lösungsmittel befreit.

Das resultierende Polycarbonat hatte eine relative Viskosität (gemessen an einer Lösung von 0,25 g Polymer in 50 ml Methylenchlorid) von 1,16.

Beispiel 2

44,88 g (0,197 mol) Bisphenol A und 13,5 g (0,34 mol) NaOH werden unter Inertgas in 766,5 g Wasser gelöst. Dann fügt man eine Lösung von 0,8 g eines Polydimethylsiloxans ($P_n$ = 10) mit Bisphenol A-Endgruppen (= 1 Gew.-% $SiMe_2O$) und 0,67 g (7,2 mmol) Phenol in 350 ml Methylenchlorid hinzu. In die gut gerührte Lösung werden bei pH 12 bis 13 und 21 bis 25 °C 31,8 g (0,32 mol) Phosgen eingeleitet. Danach werden 0,28 ml Ethylpiperidin zugegeben und noch 45 min. weiter gerührt. Die wäßrige Phase wird abgetrennt und die organische Phase, nach Ansäuern mit Phosphorsaure, mit Wasser neutral gewaschen und vom Lösungsmittel befreit.

Das resultierende Polycarbonat hatte eine relative Viskosität (gemessen an einer Lösung von 0,25 g Polymer in 50 ml Methylenchlorid) von 1,16.

Beispiel 3

45,30 g (0,20 mol) Bisphenol A und 13,5 g (0,34 mol) NaOH werden unter Inertgas in 766,5 g Wasser gelöst. Dann fügt man eine Lösung von 0,40 g eines Polydimethylsiloxans ($P_n$ = 10) mit Bisphenol A-Endgruppen (= 0,5 Gew.-% $SiMe_2O$) und 0,71 g (7,6 mmol) Phenol in 350 ml Methylenchlorid hinzu. In die gut gerührte Lösung werden bei pH 12 bis 13 und 21 bis 25 °C 31,8 g (0,32 mol) Phosgen eingeleitet. Danach werden 0,28 ml Ethylpiperidin zugegeben und noch 45 min, weiter gerührt. Die wäßrige Phase wird abgetrennt und die organische Phase, nach Ansäuern mit Phosphorsaure, mit Wasser neutral gewaschen und vom Lösungsmittel befreit,

Das resultierende Polycarbonat hatte eine relative Viskosität (gemessen an einer Lösung von 0,25 g Polymer in 50 ml Methylenchlorid) von 1,16.

Beispiel 4 (Vergleichsbeispiel):

Zu einer Lösung von 13,5 g (0,338 mol) Natriumhydroxid in 0,38 l destilliertem Wasser werden 18,97 g (0,0831 mol) Bisphenol A in einer Inertgasatmosphäre ge löst. Man fügt eine Lösung von 0,598 g (0,0029 mol) p-Isooctylphenol und 4,08 g (0,0034 mol) eines Polydimethylsiloxans ($P_n$ = 10) mit Bisphenol A-Endgruppen in 0,19 l Dichlormethan hinzu. Unter heftigem Rühren leitet man innerhalb von 5 Minuten 15,9 g (0,16 mol) Phosgen ein, Danach werden 0,14 ml Ethylpiperidin zugegeben und noch 45 min. weitergerührt. Die wäßrige Phase wird abgetrennt und die organische Phase, nach Ansäuern mit Phosphorsäure, mit Wasser neutral gewaschen und vom Lösungsmittel befreit.

Das resultierende Polycarbonat hatte eine relative Viskosität von 1,298.

Beispiel 5 (Vergleichsbeispiel):

Zu einer Lösung von 13,5 g (0,338 mol) Natriumhydroxid in 0,38 l destilliertem Wasser werden 18,97 g (0,0831 mol) Bisphenol A in einer Inertgasatmosphäre gelöst. Man fügt eine Lösung von 0,598 g (0,0029 mol) p-Isooctylphenol und 1,37 g (0,00026 mol) eines Polydimethylsiloxans ($P_n$ = 65) mit Bisphenol A-Endgruppen in 0,19 l Dichlormethan hinzu. Unter heftigem Rühren leitet man innerhalb von 5 Minuten 15,9 g (0,16 mol) Phosgen ein, Danach werden 0,14 ml Ethylpiperidin zugegeben und noch 45 min, weitergerührt. Die wäßrige Phase wird abgetrennt und die organische Phase, nach Ansäuern mit Phosphorsäure, mit Wasser neutral gewaschen und vom Lösungsmittel befreit.

Das resultierende Polycarbonat hatte eine relative Viskosität von 1,300.

Beispiel 6 (Vergleichsbeispiel):

Zu einer Lösung von 13,5 g (0,338 mol) Natriumhydroxid in 0,38 l destilliertem Wasser werden 18,97 g (0,0831 mol) Bisphenol A in einer Inertgasatmosphäre gelöst. Man fügt eine Lösung von 0,763 g (0,0037 mol) p-Isooctylphenol und 1,37 g (0,00026 mol) eines Polydimethylsiloxans ($P_n$ = 65) mit Bisphenol A-Endgruppen in 0,19 l Dichlormethan hinzu. Unter heftigem Rühren leitet man innerhalb von 5 Minuten 15,9 g (0,16 mol) Phosgen ein. Danach werden 0,14 ml Ethylpiperidin zugegeben und noch 45 min, weitergerührt. Die wäßrige Phase wird abgetrennt und die organische Phase, nach Ansäuern mit Phosphorsaure, mit Wasser neutral gewaschen und vom Lösungsmittel befreit.

Das resultierende Polycarbonat hatte eine relative Viskosität von 1,253.

Die Normfarbwerte y nach ASTM-D 1925 sowie die Schmelzviskositat nach DIN bei 300 °C und einer Schergeschwindigkeit von 100 $sec^{-1}$ dieser Polycarbonate wurde be stimmt (siehe Tabelle 1). Aus den Materialien werden auf einer Netstal Spritzgußmaschine Compact disc's mit einem Durchmesser von 12 cm hergestellt (Massetemperatur 320 °C) und deren Doppelbrechung in axialer Richtung bestimmt Hierin bestimmt man Gangunterschiede bei Verwendung eines üblichen Komparators mit einem Polarisationsmikroskop. Die ermittelten Gangunterschiede (in nm/mm) sind in Tabelle 1 aufgeführt.

Tabelle 1

| Bsp. | Normfarbwert y | Schmelzviskosität [Pa.s] | Gangunterschied [nm/mm] | Trübung nach DIN 5056 |
|---|---|---|---|---|
| 1 | 89,34 | 41 | 8,3 | 0,83 |
| 2 | 89,08 | 38 | -3,9 | 1,08 |
| 3 | 88,74 | 34 | - | 1,03 |
| 4 | 82,7 | - | - 1) | - |
| 5 | - | 802 | - 1) | 23,8 |
| 6 | - | 311 | - 1) | 16,0 |

1) Compact Disk ist trübe. Gangunterschied nicht messbar

2) Vergleichsbeispiel

## Ansprüche

1. Transparente Polydiorganosiloxan-Polycarbonat-Blockcopolymere, die ein mittleres Molekulargewicht $M_w$ (Gewichtsmittel) von 8.000 bis 30.000 (ermittelt in bekannter Weise durch Ultrazentrifugation oder Streulichtmessung) und einen Gehalt an aromatischen Carbonatstruktureinheiten von 90 bis 99,9 Gew.-% und einen Gehalt an Polydiorganosiloxanstruktureinheiten von 10 bis 0,1 Gew.-% besitzen, wobei der Polysiloxanblock einem Polymerisationsgrad von 2 bis 40 entspricht.

2. Polydiorganosiloxan-Polycarbonat-Blockcopolymere gemäß Anspruch 1 mit einem Gehalt an aromatischen Carbonatstruktureinheiten von 95 bis 99,9 Gew.-% und einen Gehalt an Polydiorganosiloxanstruktureinheiten von 5 bis 0,1 Gew.-% besitzen.

3. Polydiorganosiloxan-Polycarbonat-Blockcopolymere gemäß Anspruch 1 mit einem Gehalt an aromatischen Carbonatstruktureinheiten von 97 bis 99,9 Gew.-% und einen Gehalt an Polydiorganosiloxanstruktureinheiten von 3 bis 0,1 Gew.-%.

4. Polydiorganosiloxan-Polycarbonat-Blockcopolymere gemäß Anspruch 1, worin der Polydiorganosiloxanblock einen Polymerisationsgrad von 2 bis 15 besitzt.

5. Verwendung von Polydiorganosiloxan-Polycarbonat-Blockcopolymeren als Substrat für optische Datenspeicher.

6. Optische Datenspeicher enthaltend als Substrat ein Polydiorganosiloxan-Polycarbonat-Blockcopolymerisat.